# EUROPÄISCHE PATENTSCHRIFT

(11) **EP 0 611 735 B1**
(45) Veröffentlichungstag und Bekanntmachung des Hinweises auf die Patenterteilung: **02.05.1997**
(21) Anmeldenummer: 93120697.3
(22) Anmeldetag: 23.12.1993
(51) Int. Cl.: C04B 28/14

(54) **Trockene Putzmörtelmischung**
Dry stucco mortar mixture
Mélange de mortier d'enduit sec

(30) Priorität: 15.01.1993 DE 4300894
(43) Veröffentlichungstag der Anmeldung: 24.08.1994
(73) Patentinhaber: Rigips GmbH, D-37619 Bodenwerder (DE)
(72) Erfinder: Enenkel, Wolfgang, Dipl.-Ing., D-37619 Kirchbrak (DE); Deutsch, Peter, Dipl.-Ing., D-40667 Meerbusch (DE)
(74) Vertreter: Minderop, Ralph H., Dr. rer. nat.

(56) Entgegenhaltungen:
- EP-A- 0 144 965
- EP-A- 0 303 071
- EP-A- 0 490 813
- DE-C- 4 009 906
- FR-A- 2 307 092
- FR-A- 2 329 608
- CHEMICAL ABSTRACTS, vol. 103, no. 16, 21. Oktober 1985, Columbus, Ohio, US; abstract no. 128126h, Seite 294 ;

## Beschreibung

Putzmörtelmischungen werden in Form trockener Gemische aus Bindemitteln und Zuschlagstoffen der unterschiedlichsten Art für vielfältige Aufgaben am Bau eingesetzt. Der Putz soll dem Bauwerk gegen die Atmosphäre einen umfassenden Schutz geben und zugleich ästhetische Zwecke erfüllen. Er soll ferner Unebenheiten von Wänden und Decken ausgleichen, so daß durch die erhaltenen ebenen Flächen Anstriche, Beschichtungen oder Verkleidungen entstehen können.

Man teilt die Putze in verschiedene Gruppen ein, und zwar einmal nach Art und Anwendung und zum anderen nach den Anforderungen, die an den Putz gestellt werden. Häufig, ja in den meisten Fällen, fallen diese Forderungen zusammen, in anderen Fällen aber scheinen sie sich zu widersprechen. Nach Art und Anwendung spricht man beispielsweise von üblichen Putzen, welche ein Atmen der Wand und einen ausreichenden Feuchtigkeitsaustausch gestatten müssen, andererseits soll aber bei einem wasserabweisenden Putz auch die Atmung der Wand nicht unterbunden werden, aber die Benetzbarkeit beträchtlich verringert sein, so daß die Niederschlagsfeuchte, die der Putz bei entsprechender Witterung aufnimmt, den Wasserdampfaustausch zwischen Raum und Außenluft nicht behindert.

Schließlich werden Putze wasserabweisend gestaltet mit hydrophobierenden Zusätzen oder schallabsorbierend durch schaumige oder poröse Ausgestaltung, wobei ebenfalls wieder Luftaustausch und Hydrophobie vorhanden sein können. Andererseits soll der Putz auf die Außenfläche eines Gebäudes, auf die Innenwand, auf Decken, innerhalb und außerhalb des Gebäudes aufbringbar sein und dort spezielle Aufgaben erfüllen. All das ist nun wieder anzupassen bzw. anzugleichen an den Untergrund, auf dem der Putz aufgetragen ist, beispielsweise an sein Saugvermögen, wobei wiederum die Haftfähigkeit und gegenseitige Vernetzung zu berücksichtigen ist.

Schließlich soll der Putz ja auch eine gewisse Dauerhaftigkeit, also eine angemessene Lebenszeit haben, in der er seine Eigenschaften unverändert beibehält und darin weder durch Wetter- und Wassereinwirkungen, durch Stoß und Schlag, noch durch thermische Spannungen beeinflußt wird, fleckenlos und rissfrei bleibt und dgl. mehr.

Der Putz muß ferner den häufigen Wechsel zwischen Regenfeuchte und Sonnenstrahlung, zwischen Frost und Tauwetter überstehen können, er darf bei Durchfeuchtung und nachfolgendem Frost nicht in seiner Güte beeinträchtigt werden.

Seine Wärmedehnzahl muß gewisse elastische Bewegungen erlauben, ohne daß er reißt oder abplatzt, und wenn der Putz gefärbt ist, dürfen die Farbstoffe nicht den Bindemittelanteil beeinträchigen.

Schließlich ist trotz dieser außerordentlich vielfältigen, einander oft widersprechenden Forderungen an einen guten Putz auch eine Verarbeitbarkeit erforderlich, die im Rahmen der zur Verfügung stehenden Zeit bis zum Abbinden oder Verfestigen des Putzes die Herstellung einer glatten Oberfläche gestattet durch Abreiben mit einer Filz-, Holz- oder Gummischeibe oder mit einer Glättkelle oder die Oberfläche wird je nach architektonischer Vorschrift poliert oder geschliffen.

Die obigen Ausführungen sollen darlegen und verständlich machen, was für ein kompliziertes Gebilde ein Putzmörtel ist. Es sind nur einige der Forderungen, die der Mörtel erfüllen muß, aufgeführt. Es gibt dergleichen noch wesentlich mehr. Von Bedeutung ist auch die Kombination der Bindemittel und der Füllstoffe, wenn ein Putz auch feuerhemmende Eigenschaften haben soll. Im vorliegenden Fall sind speziellePutze angesprochen, die als Bindemittel Calciumsulfathalbhydrat enthalten oder Calciumsulfathalbhydrat im Gemisch mit Kalk.

Um all diesen Anforderungen nahe zu kommen, sind vielfältige, sehr spezifische Mörtelgemische, im vorliegenden Fall Gipsmörtelgemische, vorgeschlagen worden, beispielsweise Innenwandputze gemäß DIN 18550 mit Stuck oder Putzgips als Bindemittel, auch in Verbindung mit Hartputzgips oder Estrichgips und Sand. Solchen Mischungen kann dann Weißkalk in geringen Mengen zugesetzt werden oder Leim oder Verzögerer (Lueger Lexikon der Technik, Bd. 11, 1966).

Es ist auch bekannt, zur Wärmedämmung einem leichten Isolierputz große Anteile mittlerer Glaskügelchen oder Polystyrolschaumkügelchen zuzusetzen (FR-A-23 29 608).

Aus der EP-PS 144 965 ist ein Putzmörtel bekannt, der ein Schaumglasgranulat in einer Menge von 8 bis 20 % enthält, vorzugsweise 10 bis 12 %, und in einer Körnung von 1 bis 4 mm. Des weiteren enthält dieser Putzmörtel 7 bis 15 Gew.% eines Mehles in Form von Kalksteinmehl, Trassmehl, Perlite, Quarzmehl und/oder Elektrofilterasche sowie weitere Zuschlagstoffe und in einem Gewichtsanteil von 10 bis 50 % eines mineralischen Bindemittels, welches Gips, aber auch Zement sein kann.

Nach einem bevorzugten Ausführungsbeispiel dieser europäischen Patentschrift werden 40 Gew.% Gips und 8 Gew.% Kalkhydrat mit 12 Gew.% Schaumglasgranulat vermengt, das wegen seines geringen spezifischen Gewichts die Mörtelmasse dominiert und darüber hinaus 38 Gew.% Zuschlagstoff sowie die üblichen Verzögerer und dergleichen enthält.

Dem gegenüber ist es Aufgabe der vorliegenden Erfindung, einen Gips- bzw. Gips-Kalkputzmörtel als Trockenmörtel für die maschinelle Förderung und maschinelle oder manuelle Verarbeitung vorzuschlagen, der eine gute Rieselfähigkeit besitzt, der sich bei der Verarbeitung bzw. beim Transport in Großbehältern nicht wesentlich entmischt, eine große Ergiebigkeit besitzt und eine hinreichende Elastizität aufweist, so daß Rissbildung vermieden wird, vor allem aber soll sich der Mörtel mit den Verarbeitungsgerätschaften wie Kardätschen und Filzen leichter, d.h. schneller und besser verteilen und glätten lassen, und dabei gut am Untergrund haften.

Gelöst wird diese Aufgabe dadurch, daß der Mörtel ein feinporiges Rundgranulat aus einem Schaumglas in einer Menge von höchstens 5 Gew.% und wenigstens 0,5 Gew.% enthält, und zwar bei einer Körnung von 0,25 bis 1 mm, sowie 3 bis 12 Gew.% einer Mischung aus Perlite, Kalksteinmehl und/oder Kalksteingries und 40 bis 95 Gew.% eines Bindemittels in Form von Calciumsulfathalbhydrat, gegebenenfalls mit einem Anteil Kalk.

Eine andere Ausführungsform des erfindungsgemäßen Mörtels mit einem Gips-Kalk-Bindemittel besteht in der Verwendung von 40 Gew.% β-Gips mit 10 Gew.% Kalkhydrat, 5 Gew.% feinporigem Rundgranulat aus Glas in abgestufter Körnung zwischen 0,25 bis 1 mm sowie 46 Gew.% Kalksteingries, ebenfalls in abgestufter Körnung, und Stellmittel.

In Verfolg des Erfindungsgedankens enthält die Mischung einen Anteil eines Zuschlagstoffs, dessen Körnung auf einer auf einen hohen Füllgrad ausgerichteten Sieblinie zum feinporigen Rundgranulat aus Glas paßt.

Diese Mörtelmischung enthält dann ferner Stellmittel, insbesondere Verzögerer, Andicker und Zusatzstoffe zur Verbesserung des Wasserrückhaltevermögens sowie einen Anteil eines Tensids.

Es hat sich gezeigt, daß im Gegensatz zu dem Mörtelgemisch nach der o.g. europäischen Patentschrift 144 965 die Verarbeitbarkeit, z.B. Kardätschen und Filzen, einer maschinell aufgetragenen Schicht mit einer Menge von 1,5% Rundglasgranulat und einer Körnung von 0,25 bis 1 mm besonders vorteilhaft ist, d.h. das Erreichen und Verdichten der aufgetragenen Mörtelmasse ir einer kürzeren Arbeitszeit möglich ist als bei der Verwendung eines großkörnigeren Rundglases, welches in einer größeren Menge anwesend ist. Offensichtlich ist die Relation der Korngrößen zum sonstigen körnigen Anteil der Stoffe des Mörtels von Bedeutung und das mittlere spezifische Gewicht zu denen der anderen Zuschlagstoffe. Bei zu großen Differenzen ergab sich eine schlechtere Verarbeitbarkeit.

Eine bevorzugte Zusammensetzung der erfindungsgemäßen Putzmörtelmischung mit einem Gips-Kalk-Bindemittel ist die folgende:

| | |
|---|---|
| Bindemittel : | 90 Gew.% Gips, |
| | 2 Gew.% Kalkhydrat, |
| | 1,5 Gew.% feinporiges Rundgranulat aus Glas |

in der Körnung 0,25 bis 1 mm.

| | |
|---|---|
| Weitere Zuschlagstoffe: | 6,5 Gew.% eines gleichteiligen Gemisches aus Kalksteinmehl, Kalksteingries und Perlite. |

| | |
|---|---|
| Weitere Stellmittel : | Verzögerer, Tenside, Andicker und Zusatzstoffe zur Verbesserung des Wasserrückhaltevermögens. |

Bei dem feinporigen Rundgranulat aus Glas handelt es sich vorzugsweise um ein Korn mit zahlreichen eingeschlossenen Luftkammern mit guter Wärmedämmung bei einem Schüttgewicht von ca. 250 bis 350 kg/m³.

Das Bindemittel kann aus reinem Beta-Gips bestehen, aber auch einen Anteil Alpha-Gips enthalten. Das Gipsbindemittel kann auch aus der Rauchgasentschwefelung stammen und einen Anteil Anhydrit enthalten, dessen Körnung auf die Körnung des Rundgranulats aus Glas abgestimmt ist und ebenso seine Menge.

Bei der Herstellung der Mischung des Trockenmörtels kann es von Vorteil sein, das Tensid mit dem feinporigen, d.h. porösen Rundglasgranulat zu vermischen, ehe es mit den restlichen Bestandteilen vermischt wird. Dadurch gelingt eine verbesserte Verteilung des oberflächenaktiven Stoffes in der Mischung, was wiederum die Herstellung einer homogenen Dispersion begünstigt, wenn der Mörtel mit Wasser angemacht wird. Bei dem Tensid handelt es sich vorzugsweise um ein Fettalkoholsulfat, vorzugsweise um Natriumlaurylsulfat.

Die erfindungsgemäße Trockenmörtelmischung besitzt in mit Wasser angemachter Weise bei der Verarbeitung eine hohe Geschmeidigkeit und gestattet auch einen mehrschichtigen Auftrag, ohne dabei seine Biegefestigkeit zu verlieren. Der Mörtel läßt sich auch, falls gewünscht, während des mechanischen Förderns aufschäumen, ohne seine Homogenität zu verlieren. Dadurch ist dieser Mörtel besonders vielseitig anwendbar.

## Patentansprüche

1. Trockene Putzmörtelmischung mit Gips bzw. Gips-Kalk als Bindemittel und einem Gehalt an einem Rundgranulat aus Glas sowie Zuschlagstoffen und Stellmitteln, **dadurch gekennzeichnet**, daß das Rundgranulat aus Glas feinporig ist und in einer Menge von 0,5 bis 5 Gew.% und einer Körnung von 0,25 bis 1 mm vorliegt, daß sie weiterhin 3 bis 12 Gew.% einer Mischung aus Perlite, Kalksteinmehl und/oder Kalksteingries enthält, und daß es nach einer auf einen hohen Füllgrad ausgerichteten Sieblinie zum feinporigen Rundgranulat aus Glas passende Zuschlagstoffe enthält und der Gewichtsanteil des Bindemittels Gips oder Gips-Kalk 40 bis 95 Gew.% beträgt.

2. Putzmörtelmischung nach Anspruch 1, **dadurch gekennzeichnet**, daß der Anteil an feinporigem Rundgranulat aus Glas 1,5 bis 4 Gew.% beträgt.

3. Putzmörtelmischung nach Anspruch 1 und 2, **dadurch gekennzeichnet**, daß es sich bei den Zuschlagstoffen um Kalksteinmehl bzw. um Kalksteingries und Perlite in einer Menge bis zu 6,5 Gew.% handelt.

4. Putzmörtelmischung nach Anspruch 1 bis 3, **dadurch gekennzeichnet**, daß der Gips Beta-Halbhydrat ist, gegebenenfalls mit einem Anteil Alpha-Halbhydrat, und aus der Rauchgasentschwefelung stammt.

5. Putzmörtelmischung nach Anspruch 1, **dadurch gekennzeichnet,** daß das Bindemittel ferner einen Anteil Anhydrit enthält.

6. Putzmörtelmischung nach Anspruch 1 bis 5, **dadurch gekennzeichnet**, daß das Putzmörtelgemisch Stellmittel enthält wie Verzögerer, Tenside, Andicker und Stoffe zur Verbesserung des Wasserrückhaltevermögens.

7. Putzmörtelmischung nach Anspruch 1 bis 6, **dadurch gekennzeichnet,** daß das Tensid ein Fettalkoholsulfat ist, vorzugsweise Natriumlaurylsulfat.

8. Trockene Putzmörtelmischung mit Gips oder Gips-Kalk als Bindemittel und einem Gehalt an einem Rundgranulat aus Glas sowie Zuschlagsstoffen und Stellmitteln, dadurch gekennzeichnet, daß das Rundgranulat aus Glas feinporig ist und in einer Menge von 5 Gew.% und einer Körnung von 0,25 bis 1 mm vorliegt und 40 Gew.% β-Gips, 10 Gew.% Kalkhydrat sowie 46 Gew.% Kalksteingries, ebenfalls in abgestufter Körnung, und Stellmittel enthält.

9. Verfahren zur Herstellung einer trockenen Putzmörtelmischung nach Anspruch 1 bis 8, dadurch gekennzeichnet, daß zunächst die vorgesehene Menge des feinporigen Rundgranulats aus Glas in einem getrennten Mischvorgang mit dem Tensid vermischt und danach die restlichen Bestandteile zugesetzt werden und der Mischvorgang so lange fortgeführt wird, bis weitgehende Homogenität der Mischung erreicht ist.

## Revendications

1. Mélange de mortier d'enduit sec avec du plâtre ou du plâtre et de la chaux comme liants et une teneur en granulés ronds de verre ainsi que des additifs et des agents de réglage, caractérisé en ce que le granulé rond de verre est à pores fins et est présent en quantité allant de 0,5 à 5% en poids et présente une taille des grains allant de 0,25 à 1 mm, en ce qu'il contient en outre de 3 à 12% en poids d'un mélange de perlite, de farine de calcaire et/ou de granulés de calcaire et en ce que, selon un profil de tamisage visant à un taux de remplissage élevé du granulé rond de verre à pores fins, il contient des additifs appropriés et que la proportion en poids du liant, qui est du plâtre ou du plâtre et de la chaux, atteint de 40 à 95% en poids.

2. Mélange de mortier d'enduit selon la revendication 1, caractérisé en ce que la proportion de granulés ronds de verre à pores fins varie de 1,5 à 4% en poids.

3. Mélange de mortier d'enduit selon les revendications 1 et 2, caractérisé en ce que les additifs sont une farine de calcaire ou un granulé de calcaire et de la perlite, en quantité allant jusqu'à 6,5% en poids.

4. Mélange de mortier d'enduit selon les revendications 1 à 3, caractérisé en ce que le plâtre est du plâtre β semi-hydraté, éventuellement avec une certaine proportion de plâtre α semi-hydraté et qu'il provient de la désulfuration des fumées.

5. Mélange de mortier d'enduit selon la revendication 1, caractérisé en ce que le liant contient en outre une certaine proportion d'anhydrite.

6. Mélange de mortier d'enduit selon les revendications 1 à 5, caractérisé en ce que le mélange de mortier d'enduit contient des agents de réglage tels que ralentisseur de prise, agent tensioactif, agent épaississant et substances pour améliorer la capacité de rétention de l'eau.

7. Mélange de mortier d'enduit selon les revendications 1 à 6, caractérisé en ce que l'agent tensioactif est un sulfate d'alcool gras et, de préférence, du sulfate de sodiumlauryle.

8. Mélange de mortier d'enduit sec avec, comme liant, du plâtre ou du plâtre et de la chaux et une teneur en granulés de verre ronds, ainsi que des additifs et des agents de réglage, caractérisé en ce que le granulé de verre rond est à pores fins et est présent en quantité égale à 5% en poids et avec une taille des grains allant de 0,25 à 1 mm et contient 40% en poids de plâtre β, 10% en poids de chaux hydratée ainsi que 46% en poids de granulés de calcaire, éventuellement avec une taille des grains réglée, ainsi que des agents de réglage.

9. Procédé de préparation d'un mélange de mortier d'enduit sec selon les revendications 1 à 8, caractérisé en ce que la quantité prévue de granulés de verre ronds à pores fins est mélangée tout d'abord avec l'agent tensioactif au cours d'une opération de mélange séparée, et que les autres composants sont ajoutés ensuite, et que l'opération de mélange est continuée jusqu'à l'obtention d'une homogénéité poussée du mélange.

## Claims

1. A dry plaster mixture with gypsum or gypsum-lime as binder and a proportion of a round granulate of glass, as well as additives and adulterants, characterized in that the round granulate of glass is fine-pored and is present in an amount from 0.5 to 5% by weight and with a grain size or 0.25 to 1 mm, in that it further contains 3 to 12% by weight of a mixture of perlite, limestone powder and/or limestone grit, and in that it contains additives which are matched to the fine-pored round granulate of glass in accordance with a grading curve providing a high degree of incorporation, and the proportion by weight of the binder of gypsum or gypsum-lime amounts to 40 to 95% by weight.

2. A plaster mixture according to claim 1, characterized in that the proportion of fine-pored round granulate of glass amounts to 1.5 to 4% by weight.

3. A plaster mixture according to claim 1 and 2, characterized in that the additives are limestone powder or limestone grit and perlite in an amount of up to 6.5% by weight.

4. A plaster mixture according to claim 1 to 3, characterized in that the gypsum is beta hemihydrate, optionally with a proportion of alpha hemihydrate, and originates from flue gas desulphurisation.

5. A plaster mixture according to claim 1, characterized in that the binder further contains a proportion of anhydrite.

6. A plaster mixture according to claim 1 to 5, characterized in that the plaster mixture contains adulterants such as retardants, surface-active agents, thickeners and materials for improving water retention.

7. A plaster mixture according to claim 1 to 6, characterized in that the surface-active agent is a fatty alcohol sulphate, preferably sodium lauryl sulphate.

8. A dry plaster mixture with gypsum or gypsum-lime as binder and a proportion of a round granulate of glass as well as additives and adulterants, characterized in that the round granulate of glass is fine-pored and is present in an amount of 5% by weight and with a grain size of 0.25 to 1 mm and contains 40% by weight β gypsum, 10% by weight hydrated lime as well as 46% by weight limestone grit, likewise with graduated grain sizes, and adulterants.

9. A method of making a dry plaster mixture according to claim 1 to 8, characterized in that the amount provided of fine-pored granulate of glass is initially mixed with the surface-active agent in a separate mixing operation, and then the remaining components are added and the mixing operation is carried out sufficiently long for substantial homogeneity of the mixture to be attained.
